(19) Europäisches Patentamt
European Patent Office
Office européen des brevets

(11) **EP 3 154 290 B1**

(12) **EUROPEAN PATENT SPECIFICATION**

(45) Date of publication and mention
of the grant of the patent:
**04.09.2019 Bulletin 2019/36**

(21) Application number: **14893705.5**

(22) Date of filing: **05.06.2014**

(51) Int Cl.:
*H04W 28/06* (2009.01)    *H04W 84/18* (2009.01)
*H04L 12/24* (2006.01)    *H04W 72/04* (2009.01)
*H04L 12/26* (2006.01)    *H04W 16/02* (2009.01)
*H04W 24/02* (2009.01)

(86) International application number:
**PCT/CN2014/079211**

(87) International publication number:
**WO 2015/184609 (10.12.2015 Gazette 2015/49)**

(54) **RESOURCE OPTIMIZATION METHOD AND APPARATUS**

RESSOURCENOPTIMIERUNGSVERFAHREN UND VORRICHTUNG

PROCÉDÉ ET APPAREIL D'OPTIMISATION DE RESSOURCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.04.2017 Bulletin 2017/15**

(73) Proprietor: **Huawei Technologies Co. Ltd.
Shenzhen, Guangdong 518129 (CN)**

(72) Inventors:
• **ZHANG, Jietao
Shenzhen
Guangdong 518129 (CN)**
• **ZHUANG, Hongcheng
Shenzhen
Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
EP-A1- 2 672 749    CN-A- 101 730 224
CN-A- 101 951 628    CN-A- 103 151 802
CN-A- 103 279 353

## Description

### TECHNICAL FIELD

The present invention relates to the communications field, and more specifically, to a resource optimization method and apparatus.

### BACKGROUND

With rapid growth of network scale and user requirements, improving performance and efficiency of a wireless network by using a radio interface transmission technology and a network management optimization technology has become a key to successful operations of the wireless network. Currently, advanced radio interface transmission technologies, such as an orthogonal frequency division multiplexing (OFDM, Orthogonal Frequency Division Multiplex) technology, a multi-antenna transmission technology, and various channel coding/decoding technologies, may operate on a single link very close to the Shannon limit. A system-level network performance optimization (or resource optimization) technology will become a focus of network performance improvement. On the other hand, a network configuration needs to be able to adapt to a network environment change, so as to improve network efficiency. Therefore, the network environment change needs to be learned when resource optimization is performed. Network environment changes of different time granularities can be sensed by using different sampling frequencies, so that a change rule can be found, and an appropriate resource optimization technology and algorithm can be used.

It is already known that a self-organizing network SON (Self-Organization Network) technology is one of the foregoing resource optimization technologies. Specifically, an SON entity performs resource optimization at a long-time granularity according to key performance indicator (KPI, Key Performance Indicator) statistics of a network, and sends results of the resource optimization at the long-time granularity (for example, a network resource or configuration parameter such as a power limit of each subband of a base station, an antenna tilt angle, or a handover parameter) to a radio resource management (RRM, Radio Resource Management) entity. Then, the RRM entity performs, at a short-time granularity and within a range of a related resource or configuration parameter sent by the SON entity, service scheduling and resource allocation according to a quality of service (QoS, Quality of Service) requirement of a currently activated user service and instantaneous channel quality. A result of the service scheduling and resource allocation by the RRM entity is reflected by performance of the network at a short-time granularity. A network performance statistics collecting unit of the base station continuously collects, within each short-time cycle, performance statistics of the network at the short-time granularity, to form statistics performance indicator KPIs of the network at the long-time granularity. Then, a network performance detection unit detects and analyses collected network performance statistics. When a network performance problem occurs, the SON entity is triggered to perform resource optimization. In this way, a resource optimization ring including network performance detection, SON network optimization, RRM cell optimization, and network statistics collection is formed. In the prior art EP 2 672 749 A1 discloses a method of self-organizing network, in which the network manager (NM) SON function determines an allowable set of configuration parameters that individual network entity (NE) SON function is permitted to use, and provides the allowable set in a NE configuration attribute sent to the NE SON function.

However, in the prior art, the SON entity has its own optimization policy, and the RRM entity also has its own preset optimization policy. Therefore, the optimization policies of the SON and the RRM in the prior art may cause that resource optimization of a network cannot be effectively matched, a system resource cannot be fully utilized, and overall network performance cannot be optimized to the maximum extent. Therefore, the object of the present invention is to provide a resource optimization method and apparatus which is able to combine the advantages of each resource optimization and to match them to each other.

### SUMMARY

The present invention according to one aspect provides a resource optimization method and apparatus, which can improve an effect of resource optimization.

According to the first aspect, a resource optimization method is provided, where the method includes: receiving, by a first network device, optimization policy information sent by a second network device, where the optimization policy information is used to indicate a first optimization policy, and the first optimization policy is a policy used by the second network device to optimize a time-frequency resource of a target cell in unit of a first time period; acquiring the first optimization policy according to the received optimization policy information; and optimizing, according to the acquired first optimization policy, the time-frequency resource of the target cell in unit of a second time period, where a length of the second time period is less than a length of the first time period, and the second time period is included in the first time period.

With reference to the first aspect, in a first implementation manner of the first aspect, the optimizing, according to the acquired first optimization policy, the time-frequency resource of the target cell in unit of a second time period includes: determining a transmission rate, within a third time period, of each piece of user equipment that uses the time-frequency resource of the target cell to perform data transmission, where a length of the third time period is less than the length of the first time period, and the third time period is earlier than the first time period; determining a second optimization policy according to the first optimization policy and the transmission rate of each piece of user equipment within the third time period; and optimizing, according to the second optimization policy, the time-frequency resource of the target cell in unit of the second time period.

With reference to the first aspect and the foregoing implementation manner of the first aspect, in a second implementation manner of the first aspect, the optimizing, according to the acquired first optimization policy, the time-frequency resource of the target cell in unit of a second time period includes: determining a third optimization policy according to the first optimization policy, where the third optimization policy is proportional to the first optimization policy; and optimizing, according to the third optimization policy, the time-frequency resource of the target cell in unit of the second time period.

According to a second aspect, a resource optimization method is provided, where the method includes: determining, by a second network device, a first optimization policy, and optimizing, according to the first optimization policy, a time-frequency resource of a target cell in unit of a first time period; and sending optimization policy information to a first network device, where the optimization policy information is used to indicate the first optimization policy, so that the first network device optimizes, according to the first optimization policy, the time-frequency resource of the target cell in unit of a second time period, where a length of the second time period is less than a length of the first time period, and the second time period is included in the first time period.

With reference to the second aspect, in a first implementation manner of the second aspect, the optimizing, according to the first optimization policy, a time-frequency resource of a target cell in unit of a first time period includes: optimizing, according to the first optimization policy and based on a capacity feature and a coverage feature of the target time-frequency resource within a fourth time period, the time-frequency resource of the target cell in unit of the first time period, where the fourth time period is earlier than the first time period.

According to a third aspect, a resource optimization apparatus is provided, where the apparatus includes: a receiving unit, configured to receive optimization policy information sent by a second network device, where the optimization policy information is used to indicate a first optimization policy, and the first optimization policy is a policy used by the second network device to optimize a time-frequency resource of a target cell in unit of a first time period; an acquiring unit, configured to acquire the first optimization policy according to the optimization policy information received by the receiving unit; and an optimization unit, configured to optimize, according to the first optimization policy acquired by the acquiring unit, the time-frequency resource of the target cell in unit of a second time period, where a length of the second time period is less than a length of the first time period, and the second time period is included in the first time period.

With reference to the third aspect, in a first implementation manner of the third aspect, the optimization unit is specifically configured to: determine a transmission rate, within a third time period, of each piece of user equipment that uses the time-frequency resource of the target cell to perform data transmission, where a length of the third time period is less than the length of the first time period, and the third time period is earlier than the first time period; determine a second optimization policy according to the first optimization policy and the transmission rate of each piece of user equipment within the third time period; and optimize, according to the second optimization policy, the time-frequency resource of the target cell in unit of the second time period.

With reference to the third aspect and the foregoing implementation manner of the third aspect, in a second implementation manner of the third aspect, the optimization unit is specifically configured to: determine a third optimization policy according to the first optimization policy, where the third optimization policy is proportional to the first optimization policy; and optimize, according to the third optimization policy, the time-frequency resource of the target cell in unit of the second time period.

With reference to the third aspect and the foregoing implementation manners of the third aspect, in a third implementation manner of the third aspect, the apparatus includes a radio resource management RRM entity, and the second network device includes a self-organizing network SON entity.

According to a fourth aspect, a resource optimization apparatus is provided, where the apparatus includes: a determining unit, configured to determine a first optimization policy; an optimization unit, configured to optimize, according to the first optimization policy determined by the determining unit, a time-frequency resource of a target cell in unit of a first time period; and a sending unit, configured to send optimization policy information to a first network device, where the optimization policy information is used to indicate the first optimization policy, so that the first network device optimizes, according to the first optimization policy, the time-frequency resource of the target cell in unit of a second time period, where a length of the second time period is less than a length of the first time period, and the second time period is included in the first time period.

With reference to the fourth aspect, in a first implementation manner of the fourth aspect, the optimization unit is specifically configured to optimize, according to the first optimization policy and based on a capacity feature and a coverage feature of the target time-frequency resource within a fourth time period, the time-frequency resource of the target cell in unit of the first time period, where the fourth time period is earlier than the first time period.

With reference to the fourth aspect and the foregoing implementation manner of the fourth aspect, in a second implementation manner of the fourth aspect, the first network device includes a radio resource management RRM entity, and the apparatus includes a self-organizing network SON entity.

According to the resource optimization method and apparatus provided in embodiments of the present invention, a first network device performs resource optimization at a short-time granularity, and a second network device performs resource optimization at a long-time granularity; in addition, after performing, according to a first optimization policy, resource optimization on a target cell at the long-time granularity, the second network entity sends the first optimization policy to the first network device, so that the first network device can adapt to the first optimization policy, and performs resource optimization on the target cell at the short-time granularity. Therefore, consistency between optimization of a time-frequency resource at the short-time granularity and optimization of the time-frequency resource at the long-time granularity can be ensured, and further an optimization effect of the time-frequency resource can be effectively improved, and network performance can be improved.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of a configuration relationship between a first network device and a second network device according to an embodiment of the present invention;

FIG. 2 is a schematic diagram of a configuration relationship between a first network device and a second network device according to another embodiment of the present invention;

FIG. 3 is a schematic flowchart of a resource optimization method according to an embodiment of the present invention;

FIG. 4 is a schematic flowchart of a resource optimization method according to another embodiment of the present invention;

FIG. 5 is a schematic block diagram of a resource optimization apparatus according to an embodiment of the present invention;

FIG. 6 is a schematic block diagram of a resource optimization apparatus according to another embodiment of the present invention;

FIG. 7 is a schematic structural diagram of a resource optimization device according to an embodiment of the present invention; and

FIG. 8 is a schematic structural diagram of a resource optimization device according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

First, an architecture of a communications system to which the present invention is applicable is described.

Technical solutions of the present invention can be applied to various communications systems, such as a Global System for Mobile Communications (GSM, Global System of Mobile communication), a Code Division Multiple Access (CDMA, Code Division Multiple Access) system, a Wideband Code Division Multiple Access (WCDMA, Wideband Code Division Multiple Access Wireless) system, a General Packet Radio Service (GPRS, General Packet Radio Service) system, and a Long Term Evolution (LTE, Long Term Evolution) system.

In the foregoing systems, data may be transmitted between user equipment and a base station.

User equipment (UE, User Equipment), also referred to as a mobile terminal (Mobile Terminal), a mobile user equipment, or the like, may communicate with one or more core networks through a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges voice and/or data with the radio access network.

A base station may be a base station (BTS, Base Transceiver Station) in GSM or CDMA, or may be a base station (NodeB) in WCDMA, or may be an evolved NodeB (eNB or e-NodeB, evolutional Node B) in LTE, which is not limited in the present invention. However, for ease of description, the following embodiments are described by using a NodeB as an example.

A bearer is a basic unit that is used on a radio access network (RAN, Radio Access Network) side to control a capacity, a delay, and a bit rate of a user service. One user may use multiple bearers to implement different services.

It should be noted that, in the embodiments of the present invention, the foregoing communications systems may include one or more base stations, and one base station may provide one or more cells, which is not specially limited in the present invention.

In addition, in the foregoing communications systems, a second network device may be configured, where the second network device is configured to perform, at a long-time granularity, resource optimization on a time-frequency resource used by a corresponding cell; in addition, there may be one or multiple second network devices, which is not specially limited in the present invention.

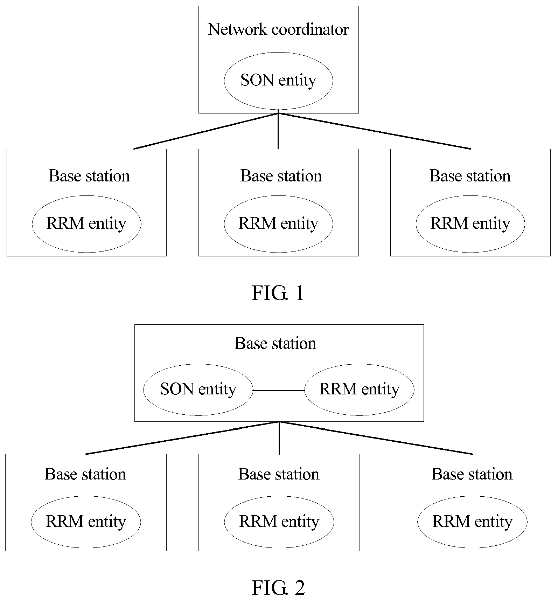

For example, as shown in FIG. 1 and FIG. 2, in the foregoing communications systems, only one second network device may be configured, and the second network device centrally performs resource optimization on all cells at the foregoing long-time granularity. In an embodiment (as shown in FIG. 1), the second network device may be disposed inside a network coordinator (or a network controller), and the network coordinator may communicate with and be connected to all controlled base stations, so as to obtain network statuses of all cells (for example, a user transmission rate over a target time-frequency resource in a cell) from all the base stations.

Alternatively, in another embodiment (as shown in FIG. 2), the second network device may be disposed inside a base station, and the base station may communicate with and be connected to another base station in the communications system, so as to obtain network statuses of all cells (for example, transmission rates, over a target time-frequency resource, of all users in a cell) from all the base stations.

For another example, one second network device may also be configured for each cell, so that each second network device performs resource optimization only on a corresponding cell at the foregoing long-time granularity.

In addition, in the foregoing communications systems, a first network device may be configured, where the first network device is configured to perform, at a short-time granularity, resource optimization on a time-frequency resource used by a corresponding cell. In addition, a quantity of the first network devices may be determined by a quantity of base stations in the communications systems, which is not specially limited in the present invention. For example, as shown in FIG. 1 and FIG. 2, one first network device may be configured for each base station, and the first network device centrally performs, at the foregoing short-time granularity, resource optimization on all cells provided by the base station. For another example, one first network device may also be configured for each cell, so that each first network device performs resource optimization only on a corresponding cell at the foregoing short-time granularity.

Optionally, the first network device includes a radio resource management RRM entity, and the second network device includes a self-organizing network SON entity.

Specifically, in the embodiments of the present invention, the self-organizing network (SON, Self Organizing Network) entity may serve as the second network device, and perform, at the long-time granularity, resource optimization on a target time-frequency resource (that is, a radio communications resource used by a target cell). In addition, the SON entity may be disposed inside a base station or a network coordinator (or a network controller), or may communicate with or be connected to a base station or a network coordinator, so as to obtain network statuses of all cells (for example, a user transmission rate over a target time-frequency resource in a cell) from the base station or the network coordinator.

In addition, in the embodiments of the present invention, a radio resource management (RRM, Radio Resource Management) entity may serve as the first network device, and perform, at the short-time granularity, resource optimization on a target time-frequency resource (that is, a radio communications resource used by a target cell). In addition, the RRM entity may be disposed inside a base station, or may communicate with or be connected to a base station, so as to obtain network statuses of all cells (for example, a user transmission rate over a target time-frequency resource in a cell) from the base station or the network coordinator.

It should be understood that the above-listed SON entity that serves as the second network device is merely for exemplary description, which is not specially limited in the present invention; any other device that can implement resource optimization on a time-frequency resource at the long-time granularity shall fall within the protection scope of the present invention. Likewise, the above-listed RRM entity that serves as the first network device is merely for exemplary description, and any other device that can implement resource optimization on a time-frequency resource at the short-time granularity shall fall within the protection scope of the present invention.

In addition, a cycle (or a length) of the foregoing long-time granularity is greater than a cycle (or a length) of the foregoing short-time granularity.

For ease of understanding and description, the following describes a specific process of the resource optimization method in the embodiments of the present invention based on an example in which an SON entity serves as the second network device and an RRM entity serves as the first network device. In addition, without loss of generality, the description is based on an example in which the SON entity performs, at the long-time granularity, resource optimization on a time-frequency resource used by a cell (that is, one target cell) (for example, a target time-frequency resource is a subband in frequency-domain bandwidth that is allocated by a communications system to the cell). Likewise, the description is based on an example in which the RRM entity performs, at the short-time granularity, resource optimization on a subband used by a target cell.

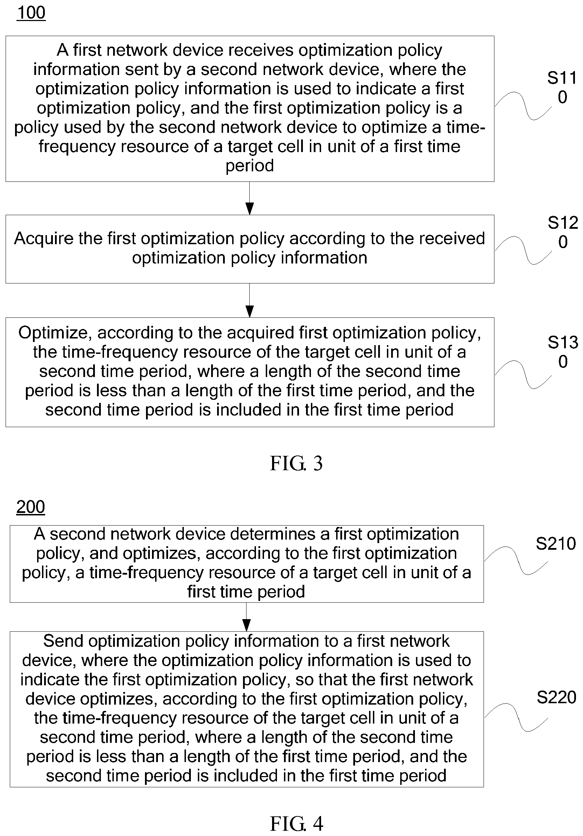

FIG. 3 is a schematic flowchart that describes, from a perspective of a first network device, a resource optimization method 100 according to an embodiment of the present invention. As shown in FIG. 3, the method 100 includes:

S110. A first network device receives optimization policy information sent by a second network device, where the optimization policy information is used to indicate a first optimization policy, and the first optimization policy is a policy used by the second network device to optimize a time-frequency resource of a target cell in unit of a first time period.

S120. Acquire the first optimization policy according to the received optimization policy information.

S130. Optimize, according to the acquired first optimization policy, the time-frequency resource of the target cell in unit of a second time period, where a length of the second time period is less than a length of the first time period, and the second time period is included in the first time period.

Specifically, an SON entity (that is, the second network device) may determine the first optimization policy, where the optimization policy is a policy used to perform, at a long-time granularity and in unit of the first time period, resource optimization on the time-frequency resource (for example, a frequency-domain resource, which, for ease of understanding and description, is hereinafter denoted as a subband s) used by the target cell (for ease of understanding and description, hereinafter denoted as a cell b).

Optionally, the second network device optimizes, according to the first optimization policy and based on a capacity feature and a coverage feature of the target time-frequency resource within a fourth time period, the time-frequency resource of the target cell in unit of the first time period, where the fourth time period is earlier than the first time period.

Specifically, the SON entity is mainly configured to perform, at the long-time granularity, resource optimization on a capacity and coverage of a corresponding cell, so as to implement, at the long-time granularity, optimization on a capacity and coverage of a communications system (or a network) corresponding to the SON entity, for example. For example, for any subband s in a time-frequency resource used by any cell b, an optimization utility function $U_{b,s}$ for the long-time granularity can be expressed as:

$$U_{b,s} = \mu_{b,s} \cdot \overline{U}_{b,s} + \left(1 - \mu_{b,s}\right) \cdot \underline{U}_{b,s}$$

$\overline{U}_{b,s}$ is an average value, which may be calculated by the SON entity, of transmission rates that can be reached by all user equipments in the subband s of the cell b within a relatively long time (for example, the first time period or the fourth time period). Therefore, $\overline{U}_{b,s}$ can be used to represent a long-time capacity feature of the cell b on the subband s. It should be noted that, in this embodiment of the present invention, a method for calculating $\overline{U}_{b,s}$ (for example, $\overline{U}_{b,s}$ within the first time period) may be similar to the prior art. To avoid repeated description, detailed description of the method is omitted herein.

$\underline{U}_{b,s}$ is an average value (hereinafter referred to as an average rate), which may be calculated by the SON entity, of transmission rates that can be reached by sampled user equipments (for example, 5% of user equipments, which have a lowest rate) in the subband s of the cell b within a relatively long time (for example, the first time period or the fourth time period). The sampled user equipments may be a preset percentage (for example, 5%) of all user equipments in the cell b, and an average rate of any user equipment of the sampled user equipments is less than an average rate of any user equipment of the remaining 95% of user equipments. Therefore, $\underline{U}_{b,s}$ can be used to represent a long-time coverage feature of the cell b on the subband s. It should be noted that, in this embodiment of the present invention, a method for calculating $\underline{U}_{b,s}$ (for example, $\underline{U}_{b,s}$ within the first time period) may be similar to the prior art. To avoid repeated description, detailed description of the method is omitted herein.

$\mu_{b,s}$ represents the foregoing first optimization policy, that is, a policy used by the SON to perform optimization on the subband s of the cell b in a current network status (which is corresponding to a long-time capacity feature and a long-time coverage feature of the cell b), where a value range of $\mu_{b,s}$ is [0,1].

During actual network operation, the SON entity may determine, according to a current network status and based on network KPIs collected in a long time within the fourth time period, the first optimization policy within the first time period, that is, a value of $\mu_{b,s}$.

For example, if it is determined, based on the network KPIs collected in a long time, that the foregoing $\underline{U}_{b,s}$ is lower than a preset threshold (for ease of distinguishing, denoted as a first preset threshold) within the fourth time period, it indicates that coverage of the cell b is relatively poor, and a coverage feature of the cell b needs to be enhanced. In this case, the SON entity may make $\mu_{b,s}$ smaller (compared with an optimization policy $\mu'_{b,s}$ within the fourth time period), or use a relatively small value of $\mu_{b,s}$. Particularly, if the SON entity selects to make $\mu_{b,s}$ tend to be 0, it indicates that a policy used by the SON entity to perform optimization on the subband s of the cell b is to maximize the coverage feature of the cell b.

For another example, if it is determined, based on the network KPIs collected in a long time, that the foregoing $\overline{U}_{b,s}$ is lower than a preset threshold (for ease of distinguishing, denoted as a second preset threshold) within the fourth time period, it indicates that a capacity of the cell b is relatively poor, and a capacity feature of the cell b needs to be enhanced. In this case, the SON entity may make $\mu_{b,s}$ greater (compared with an optimization policy $\mu'_{b,s}$ within the fourth time period), or use a relatively large value of $\mu_{b,s}$. Particularly, if the SON entity selects to make $\mu_{b,s}$ tend to be 1, it indicates that a policy currently used by the SON entity to perform optimization on the subband s of the cell b is to maximize the capacity feature of the cell b.

After determining the first optimization policy (that is, $\mu_{b,s}$) as described above, the SON entity may perform, based on the first optimization policy, resource optimization on a time-frequency resource of the cell b at a long-time granularity. In addition, the process may be similar to the prior art. To avoid repeated description, repeated description is omitted herein.

In addition, a result of the resource optimization at the long-time granularity may include but is not limited to the following parameters:

a power limit of a subband s of a base station that provides the cell b; a tilt angle of an antenna corresponding to the cell b; and a handover parameter of the cell b.

It should be understood that the result of the above-listed resource optimization at the long-time granularity is merely for exemplary description, and the present invention is not limited thereto; any other device parameter or configuration that can be used to perform optimization according to the first optimization policy (that is, $\mu_{b,s}$) shall fall within the protection scope of the present invention.

Then, the SON entity may send, to an RRM entity (that is, the first network device) corresponding to the cell b, the optimization policy information that is used to indicate the foregoing first optimization policy.

Therefore, in S110, the RRM entity corresponding to the cell b may receive the foregoing optimization policy information; in S120, the RRM entity may extract the foregoing first optimization policy (that is, $\mu_{b,s}$) from the optimization policy information.

Then, in S130, the RRM entity may perform, according to the first optimization policy, resource optimization on a time-frequency resource of the corresponding cell (that is, the cell b) at a short-time granularity in unit of the second time period.

Optionally, the optimizing, according to the acquired first optimization policy, the time-frequency resource of the target cell in unit of a second time period includes:

determining a transmission rate, within a third time period, of each piece of user equipment that uses the time-frequency resource of the target cell to perform data transmission, where a length of the third time period is less than the length of the first time period, and the third time period is earlier than the first time period;

determining a second optimization policy according to the first optimization policy and the transmission rate of each piece of user equipment within the third time period; and

optimizing, according to the second optimization policy, the time-frequency resource of the target cell in unit of the second time period.

Specifically, the RRM entity may acquire a transmission rate (specifically, an average data transmission rate), within a third time period, of a user that is in the cell b and that uses the subband s (for ease of understanding and distinguishing, hereinafter denoted as a target user).

In this embodiment of the present invention, a quantity of the target users can be any value, which is not specially limited in the present invention. For ease of understanding and description, without loss of generality, the following uses a processing process for a target user k as an example to describe a subsequent processing process.

For example, the RRM entity may record instantaneous transmission rates of the target user k at different time points within the third time period (for ease of understanding, hereinafter denoted as a third time period T), where a length of the third time period is less than a length of the foregoing fourth time period, and the third time period is included in the fourth time period.

It should be noted that, in this embodiment of the present invention, the foregoing first time period and fourth time period may be divided by using a current time point t as a reference. For example, a time period of a specified length (greater than the length of the third time period) before the current time point t is the fourth time period, and a time period of a specified length (greater than the length of the second time period) after the current time t is the first time period. Likewise, the foregoing second time period and third time period may also be divided by using the current time point t as a reference. For example, a time period of a specified length (less than the length of the fourth time period) before the current time point t is the third time period, and a time period of a specified length (less than the length of the first time period) after the current time t is the second time period.

Without loss of generality, if an instantaneous transmission rate at the current time point t (in this case, the third time period from a time point t-T to a time point t-1) is denoted as $r_k(t)$, an average transmission rate $R_k(t)$ of the target user k within the third time period is:

$$R_k\left(t\right) = \frac{1}{T}\sum_{\tau=t-T}^{t-1} r_k\left(\tau\right).$$

In addition, in this embodiment of the present invention, from the perspective of service scheduling of the target user k, a user utility function $V_k(R_k(t))$ of the target user k within the second time period is determined, that is,

$$V_k\left(R_k\left(t\right)\right) = \begin{cases} a_k \dfrac{R_k\left(t\right)^{\gamma}}{\gamma}, & \gamma \in \left(0,1\right] \\ a_k \log\left(R_k\left(t\right)\right), & \gamma = 0 \end{cases}.$$

That is, the user utility function $V_k(R_k(t))$ may reflect information about scheduling of a service of the target user k by the RRM entity within the second time period. $a_k$ may be a QoS weighting coefficient of the target user k, and may be preset according to a level (such as, a gold user, a silver user, or a bronze user) of the target user k.

$\gamma$ represents a scheduling factor, is determined by the RRM entity according to the foregoing first optimization policy, and reflects the second optimization policy used by the RRM entity of a base station to perform service scheduling for all target users in the target cell. A value range of $\gamma$ may be [0,1], $\gamma = 0$ is corresponding to a proportional fair optimization policy, and $\gamma = 1$ is corresponding to a maximum throughput optimization policy.

It can be seen that when the RRM entity of the base station uses different second optimization policies, all target users obtain different scheduling opportunities, and transmission rates of all the users are different. Therefore, performance of the cell also changes, and resource optimization can be performed at a short-time granularity in unit of the second time period according to the scheduling factor $\gamma$.

To optimize the performance of the cell to the maximum extent, the RRM entity needs to perform cell resource allocation, so as to maximize a sum of utility functions of all user equipments in the cell, that is, to maximize the user utility function $V(\boldsymbol{R}(t))$ of all the users in the cell b within the second time period. If all the user equipments in the cell b are denoted as $K_b$,

$$V\left(\boldsymbol{R}\left(t\right)\right) = \sum_{k\in K_b} V_k\left(R_k\left(t\right)\right).$$

For illustrative but not limiting purpose, in this embodiment of the present invention, a gradient-based optimization method may be used to perform cell resource allocation. Specifically, the RRM entity performs cell resource allocation to maximize a gradient direction component of a total utility function of all users in the cell. For illustrative but not limiting purpose, the foregoing criterion $\max \nabla V(\boldsymbol{R}(t))^T \cdot \boldsymbol{r}(t)$ may be expressed as:

$$\max \nabla V\left(\boldsymbol{R}\left(t\right)\right)^T \cdot \boldsymbol{r}\left(t\right) = \max \sum_{k\in K_b} V'_k\left(R_k\left(t\right)\right)\cdot r_k\left(t\right) = \max \sum_{k\in K_b} a_k R_k\left(t\right)^{\gamma(t)-1}\cdot r_k\left(t\right).$$

$\boldsymbol{r}(t)$ represents a rate that is calculated according to interference (for example, a signal-to-noise ratio) after the RRM performs the resource allocation, that is, after $q_{kn}^*\left(t\right)$ and $x_{kn}^*\left(t\right)$, which are described below, are obtained. In addition, the calculation process may be the same as the prior art. To avoid repeated description, description of the process is omitted.

The following describes in detail a process in which the RRM entity determines, according to the foregoing first optimization policy, the second optimization policy (that is, the scheduling factor $\gamma$) for the second time period.

For ease of understanding and description, the following uses a process in which the RRM entity determines a scheduling factor $\gamma_{b,s}$ for the subband s of the cell b as an example for description.

The RRM entity may determine a short-time granularity optimization utility function $u_{b,s}$ of the subband s of the cell b, that is,

$$u_{b,s} = \eta_{b,s} \cdot \overline{u}_{b,s} + \left(1 - \eta_{b,s}\right) \cdot \underline{u}_{b,s} .$$

$\overline{u}_{b,s}$ may be an average value, which is calculated by the RRM entity, of transmission rates of all user equipments in the subband s of the cell b within a relatively short time (for example, the second time period or the third time period). Therefore, $\overline{u}_{b,s}$ can be used to represent a short-time capacity feature of the cell b on the subband s. In this embodiment of the present invention, $\overline{u}_{b,s}$ can be determined by using the following formula 1.

$$\overline{u}_{b,s} = \frac{1}{K_{b,s}} \frac{\sum_{k \in K_{b,s}} \tilde{q}_{kn} \sum_{n \in N^{(k)}} \psi_{kn,kn}}{\sum_{k \in K_{b,s}} N^{(k)} \sum_{l \in K \backslash K_{b,s}} \sum_{n \in N^{(k)}} \tilde{q}_{ln} \psi_{ln,kn} + \sum_{k \in K_{b,s}} N^{(k)} \sigma^2} \qquad \text{Formula 1}$$

K is a total quantity of user equipments in a communications system, where the communications system is formed by multiple cells, including the cell b, and, for example, the RRM entity can acquire a specific value of K from an upper-layer management entity. $K_{b,s}$ is a quantity of user equipments that use the subband s of the cell b to perform communication. $N^{(k)}$ is a quantity of subcarriers that are in the subband s and that are occupied by the user equipment k. $\tilde{q}_{kn}$ is a power that is on a subcarrier n and that is allocated by the communications system to the user equipment k. $\psi_{kn,kn}$ is a gain value of a channel from the user equipment k to the subcarrier n of a base station that serves the user equipment k (for ease of distinguishing, denoted as a base station a). In addition, a method and a process for acquiring the value of $\psi_{kn,kn}$ may be the same as or similar to the prior art. To avoid repeated description, detailed descriptions of the method and the process are omitted. $\tilde{q}_{ln}$ is a power that is on the subcarrier n and that is allocated by the system to user equipment l. $\psi_{ln,kn}$ is a gain value of a channel from the user equipment k to the subcarrier n of a base station that serves the user equipment l (for ease of distinguishing, denoted as a base station b). In addition, a method and a process for acquiring the value of $\psi_{ln,kn}$ may be the same as or similar to the prior art. To avoid repeated description, detailed descriptions of the method and the process are omitted. $\sigma^2$ is a power of white Gaussian noise on each subcarrier.

$\underline{u}_{b,s}$ may be a calculated average value (hereinafter referred to as an average rate) of transmission rates of sampled user equipments (for example, 5% of user equipments, which have a lowest rate) in the subband s of the cell b within a relatively short time of the second time period. The sampled user equipments may be a preset percentage (for example, 5%) of all user equipments in the cell b, and an average rate of any user equipment of the sampled user equipments is less than an average rate of any user equipment of the remaining 95% of user equipments. Therefore, $\underline{u}_{b,s}$ can be used to represent a short-time coverage feature of the cell b on the subband s. A difference between an operation performed by the RRM entity and an operation performed by the SON entity is as follows: The SON entity optimizes a network resource within a long time (for example, within the first time period) by using an average value of $\psi_{kn,kn}$ and an average value of $\psi_{ln,kn}$ that are acquired within a long time (for example, within the fourth time period), while the RRM entity optimizes a cell resource within a short time (for example, within the second time period) by using an average value of $\psi_{kn,kn}$ and an average value of $\psi_{ln,kn}$ that are acquired within a short time (for example, within the third time period). Another major difference is as follows: In the RRM entity, because user scheduling fairness needs to be considered, the second optimization policy selected by the RRM entity (that is, the scheduling factor $\gamma$) has a decisive effect on allocation of the cell resource (for example, a subcarrier and a power). In this embodiment of the present invention, $\underline{u}_{b,s}$ can be determined by using the following formula 2.

$$\underline{u}_{b,s} = \min_{k \in K_{b,s}} \frac{1}{N^{(k)}} \sum_{n \in N^{(k)}} \frac{\tilde{q}_{kn} \psi_{kn,kn}}{\sum_{l \in K \backslash K_{b,s}} \tilde{q}_{ln} \psi_{ln,kn} + \sigma^2} \qquad \text{Formula 2}$$

K is a total quantity of user equipments in a communications system, where the communications system is formed by multiple cells, including the cell b, and, for example, the RRM entity can acquire a specific value of K from an upper-layer management entity. $K_{b,s}$ is a quantity of user equipments that use the subband s of the cell b to perform communication. $N^{(k)}$ is a quantity of subcarriers that are occupied by the user equipment $k$. $\tilde{q}_{kn}$ is a power that is allocated by the communications system to the user equipment $k$ on a subcarrier $n$. $\psi_{kn,kn}$ is a gain value of a channel from the user equipment $k$ to the subcarrier $n$ of a base station that serves the user equipment $k$ (for ease of distinguishing, denoted as a base station a).

In addition, a method and a process for acquiring the value of $\psi_{kn,kn}$ may be the same as or similar to the prior art. To avoid repeated description, detailed descriptions of the method and the process are omitted. $\tilde{q}_{ln}$ is a power that is allocated by the system to a user equipment $l$ on the subcarrier $n$. $\psi_{ln,kn}$ is a gain value of a channel from the user equipment $k$ to the subcarrier $n$ of a base station that serves the user equipment $l$ (for ease of distinguishing, denoted as a base station b). $\sigma^2$ is a power of white Gaussian noise on each subcarrier.

$\eta_{b,s}$ represents an optimization policy (for ease of understanding and distinguishing, hereinafter denoted as a third optimization policy) used by the RRM entity to perform, at the short-time granularity of the second time period, resource optimization on the subband s, that is, a policy used by the RRM entity to perform optimization on the subband s of the cell b in a current network status (which is corresponding to a short-time capacity feature and a short-time coverage feature of the cell b), where a value range of $\eta_{b,s}$ may be [0,1].

In this embodiment of the present invention, a value of $\eta_{b,s}$ is related to the following constraint a:

Constraint a

Optionally, the optimizing, according to the acquired first optimization policy, the time-frequency resource of the target cell in unit of a second time period includes:

determining a third optimization policy according to the first optimization policy, where the third optimization policy is proportional to the first optimization policy; and

optimizing, according to the third optimization policy, the time-frequency resource of the target cell in unit of the second time period.

Specifically, after obtaining $\mu_{b,s}$ from the SON entity as described above, the RRM entity may determine a value of $\eta_{b,s}$ according to $\mu_{b,s}$, that is:

$$\eta_{b,s} = \lambda \cdot \mu_{b,s},$$

where

$\lambda$ is a positive real number (for example, 1), and may be preset and stored in the RRM entity.

Optionally, a value of $\eta_{b,s}$ may also be related to the following constraint b:

Constraint b

During actual network operation, the RRM entity may determine, according to the current network status and based on network KPIs collected within a short time of the third time period, the third optimization policy, that is, a value of $\eta_{b,s}$.

For example, if it is determined, based on the network KPIs collected within a short time, that the foregoing $\underline{u}_{b,s}$ is lower than a preset threshold (for ease of distinguishing, denoted as a third preset threshold), it indicates that coverage of the cell b is relatively poor, and a coverage feature of the cell b needs to be enhanced. In this case, the RRM entity may make $\eta_{b,s}$ smaller (compared with the optimization policy $\eta'_{b,s}$ within the third time period). Particularly, if the RRM entity selects to make $\eta_{b,s}$ tend to be 0, it indicates that a policy used by the RRM entity to perform optimization on the subband s of the cell b is to maximize the coverage feature of the cell b.

For another example, if it is determined, based on the network KPIs collected within a short time, that the foregoing $\overline{u}_{b,s}$ is lower than a preset threshold (for ease of distinguishing, denoted as a fourth preset threshold), it indicates that a capacity of the cell b is relatively poor, and a capacity feature of the cell b needs to be enhanced. In this case, the RRM entity may make $\eta_{b,s}$ larger (compared with the optimization policy $\eta'_{b,s}$ within the third time period). Particularly, if the RRM entity selects to make $\eta_{b,s}$ tend to be 1, it indicates that a policy currently used by the RRM entity to perform optimization on the subband s of the cell b is to maximize the capacity feature of the cell b.

It should be noted that the foregoing constraint a may be used alone or used in combination with the foregoing constraint b. For example, a change tendency of $\eta_{b,s}$ may be first determined according to the foregoing constraint b, and then a specific value of $\eta_{b,s}$ may be determined with reference to the foregoing constraint a. For example, in a case in which multiple values of $\lambda$ are stored for use, a value of $\lambda$ that can make $\eta_{b,s}$ determined according to the constraint a meet a requirement of the foregoing constraint b may be selected.

It should be understood that the above-listed method for determining $\eta_{b,s}$ is merely for exemplary description, and the present invention is not limited thereto, for example, $\mu_{b,s}$ may be directly used as $\eta_{b,s}$.

After the third optimization policy (that is, $\eta_{b,s}$) is determined, resource optimization may be performed on the target time-frequency resource at a short-time granularity in unit of the second time period according to the third optimization policy.

It should be noted that the foregoing resource optimization at the short-time granularity in unit of the second time period includes the following two aspects, that is, aspect 1: determining a second optimization policy; and aspect 2: allocating a radio resource to each user equipment in a target cell.

The following uses a processing process for the subband s of the cell b as an example for description.

1. The RRM entity may acquire, from the SON entity, a limit power $p_{\max}^{(b,s)}$, that is, a maximum power limit of the subband s of the cell b.

2. The RRM entity may acquire, from the SON entity, information about interference $\varphi_{kn}(t)$, which is collected within a long time, of the user equipment k that uses the subband s of the cell b.

3. The RRM entity may calculate the foregoing $V_k(R_k(t)) = a_k R_k(t)^{\gamma(b,s)(t)-1}$, that is, calculate a corresponding $V_k(R_k(t))$ by traversing values of $\gamma^{(b,s)}(t)$ (for example, a value range of the foregoing $\gamma_{b,s}$ is $\Omega \in [0,1]$, and therefore the RRM entity can traverse all values within the foregoing value range based on, for example, a step of 0.01).

4. The RRM entity traverses, based on all values of $V_k(R_k(t))$ that are calculated in step 3 according to different values of $\gamma^{(b,s)}(t)$, all subcarriers in the subband s by separately using methods such as a Lagrange duality method, so as to obtain optimal subcarrier allocation $x_{kn}^{*}(t)$ and power allocation $q_{kn}^{*}(t)$; that is, the $x_{kn}^{*}(t)$ and $q_{kn}^{*}(t)$ may be expressed as a function of $\gamma^{(b,s)}(t)$.

Then, after the foregoing parameters are obtained as described above, an optimization utility function $u_{b,s}(\overline{x}_{ks}(t), \overline{q}_{ks}(t), \gamma^{(b,s)}(t))$ of the user equipment k on the subband s of the cell b is determined, where $\overline{x}_{ks}(t)$ is represented by a vector formed by an allocation indicator $x_{kn}^{*}(t)$ that is obtained by the user equipment k on each subcarrier in the subband s, and $\overline{q}_{ks}(t)$ is represented by a vector formed by a power $q_{kn}^{*}(t)$ that is allocated to the user equipment k on each subcarrier in the subband s.

5. The RRM entity may calculate, according to the foregoing optimization utility function and the foregoing formula 1 and formula 2, the second optimization policy for the subband s of the foregoing cell that makes $u_{b,s}(x_{ks}(t), q_{ks}(t), \gamma^{(b,s)}(t))$ reach a maximum value (or close to a maximum value), that is, a value of the scheduling factor $\gamma_{b,s}$, that is:

$$\tilde{\gamma}^{(b,s)}(t) = \max_{\gamma^{(b,s)} \in \Omega} u_{b,s}\left(x_{ks}(t), q_{ks}(t), \gamma^{(b,s)}(t)\right)$$.

6. For each subband s, the RRM entity acquires, according to $\tilde{\gamma}^{(b,s)}(t)$ calculated in step 5, $\tilde{x}_{kn}(t)$ and $\tilde{q}_{kn}(t)$ that are corresponding to $\tilde{\gamma}^{(b,s)}(t)$ and that are calculated in step 4, and use $\tilde{x}_{kn}(t)$ and $\tilde{q}_{kn}(t)$ for optimal subcarrier allocation and power allocation at a time point t.

According to the resource optimization method provided in this embodiment of the present invention, a first network device performs resource optimization at a short-time granularity, and a second network device performs resource optimization at a long-time granularity; in addition, after performing resource optimization on a target cell at the long-time granularity according to a first optimization policy, the second network entity sends the first optimization policy to the first network device, so that the first network device can adapt to the first optimization policy, and performs resource optimization on the target cell at the short-time granularity. Therefore, consistency between optimization of a time-frequency resource at the short-time granularity and optimization of the time-frequency resource at the long-time granularity can be ensured, and further an optimization effect of the time-frequency resource can be effectively improved, and network performance can be improved.

FIG. 4 is a schematic flowchart that describes, from a perspective of a second network device, a resource optimization method 200 according to an embodiment of the present invention. As shown in FIG. 4, the method 200 includes:

S210. A second network device determines a first optimization policy, and optimizes, according to the first optimization policy, a time-frequency resource of a target cell in unit of a first time period.

S220. Send optimization policy information to a first network device, where the optimization policy information is used to indicate the first optimization policy, so that the first network device optimizes, according to the first optimization policy, the time-frequency resource of the target cell in unit of a second time period, where a length of the second time period is less than a length of the first time period, and the second time period is included in the first time period.

A function of the second network device and a process of interaction between the second network device and another entity are the same as those of the SON entity mentioned in the foregoing embodiment, and therefore details are not described herein again.

For any subband s in a time-frequency resource used by any cell b, its optimization utility function $U_{b,s}$ for a long-time granularity has been introduced in the foregoing embodiment, and details are not described herein again.

An RRM entity corresponding to the cell b may receive the foregoing optimization policy information, and extract the foregoing first optimization policy (that is, $\mu_{b,s}$) from the optimization policy information.

Then, the first network device (for example, the RRM entity) may perform, according to the first optimization policy, resource optimization on a time-frequency resource of the corresponding cell (that is, cell b) at a short-time granularity in unit of the second time period. For a specific optimization manner, reference may be made to the description in the foregoing embodiment, and details are not described herein again.

According to the resource optimization method provided in this embodiment of the present invention, a first network device performs resource optimization at a short-time granularity, and a second network device performs resource optimization at a long-time granularity; in addition, after performing, according to a first optimization policy, resource optimization on a target cell at the long-time granularity, the second network entity sends the first optimization policy to the first network device, so that the first network device can adapt to the first optimization policy, and performs resource optimization on the target cell at the short-time granularity. Therefore, consistency between optimization of a time-frequency resource at the short-time granularity and optimization of the time-frequency resource at the long-time granularity can be ensured, and further an optimization effect of the time-frequency resource can be effectively improved, and network performance can be improved.

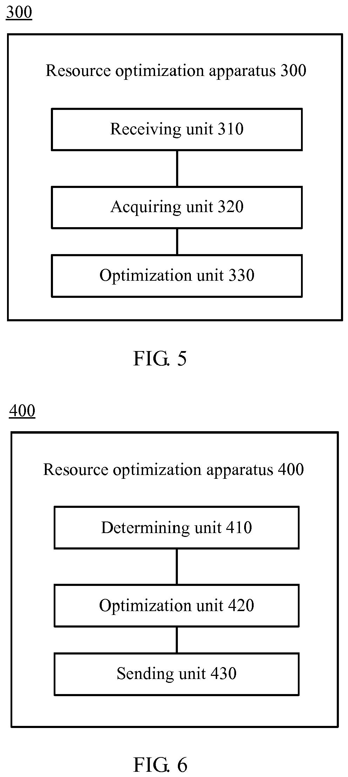

The foregoing has described in detail the resource optimization method according to the embodiments of the present invention with reference to FIG. 1 to FIG. 4. The following describes the resource optimization apparatus according to the embodiments of the present invention with reference to FIG. 5 and FIG. 6.

FIG. 5 shows a schematic block diagram of resource optimization 300 according to an embodiment of the present invention. As shown in FIG. 5, the apparatus 300 includes:

a receiving unit 310, configured to receive optimization policy information sent by a second network device, where the optimization policy information is used to indicate a first optimization policy, and the first optimization policy is a policy used by the second network device to optimize a time-frequency resource of a target cell in unit of a first time period;
an acquiring unit 320, configured to acquire the first optimization policy according to the optimization policy information received by the receiving unit 310; and
an optimization unit 330, configured to optimize, according to the first optimization policy acquired by the acquiring unit 320, the time-frequency resource of the target cell in unit of a second time period, where a length of the second time period is less than a length of the first time period, and the second time period is included in the first time period.

Optionally, the optimization unit 330 is specifically configured to determine a transmission rate, within a third time period, of each piece of user equipment that uses the time-frequency resource of the target cell to perform data transmission, where a length of the third time period is less than the length of the first time period, and the third time period is earlier than the first time period; determine a second optimization policy according to the first optimization policy and the transmission rate of each piece of user equipment within the third time period; and optimize, according to the second optimization policy, the time-frequency resource of the target cell in unit of the second time period.

Optionally, the optimization unit 330 is specifically configured to determine a third optimization policy according to the first optimization policy, where the third optimization policy is proportional to the first optimization policy; and optimize, according to the third optimization policy, the time-frequency resource of the target cell in unit of the second time period.

Optionally, the second network device optimizes, according to the first optimization policy and based on a capacity feature and a coverage feature of the target time-frequency resource within a fourth time period, the time-frequency resource of the target cell in unit of the first time period, where the fourth time period is earlier than the first time period.

Optionally, the apparatus 300 includes a radio resource management RRM entity, and the second network device includes a self-organizing network SON entity.

The resource optimization apparatus 300 according to this embodiment of the present invention may be corresponding to the first network device (for example, the RRM entity) in the methods in the embodiments of the present invention. In addition, all units, that is, all modules, in the resource optimization apparatus 300, and the foregoing other operations and/or functions are separately intended to implement corresponding processes of the method 100 in FIG. 3. For brevity, details are not described herein again.

According to the resource optimization apparatus provided in this embodiment of the present invention, a first network device performs resource optimization at a short-time granularity, and a second network device performs resource optimization at a long-time granularity; in addition, after performing, according to a first optimization policy, resource optimization on a target cell at the long-time granularity, the second network entity sends the first optimization policy to the first network device, so that the first network device can adapt to the first optimization policy, and performs resource optimization on the target cell at the short-time granularity. Therefore, consistency between optimization of a time-frequency resource at the short-time granularity and optimization of the time-frequency resource at the long-time granularity can be ensured, and further an optimization effect of the time-frequency resource can be effectively improved, and network performance can be improved.

FIG. 6 shows a schematic block diagram of resource optimization 400 according to an embodiment of the present invention. As shown in FIG. 6, the apparatus 400 includes:

> a determining unit 410, configured to determine a first optimization policy;
> an optimization unit 420, configured to optimize, according to the first optimization policy determined by the determining unit 410, a time-frequency resource of a target cell in unit of a first time period; and
> a sending unit 430, configured to send optimization policy information to a first network device, where the optimization policy information is used to indicate the first optimization policy, so that the first network device optimizes, according to the first optimization policy, the time-frequency resource of the target cell in unit of a second time period, where a length of the second time period is less than a length of the first time period, and the second time period is included in the first time period.

Optionally, the optimization unit 430 is specifically configured to optimize, according to the first optimization policy and based on a capacity feature and a coverage feature of the target time-frequency resource within a fourth time period, the time-frequency resource of the target cell in unit of the first time period, where the fourth time period is earlier than the first time period.

Optionally, the first network device includes a radio resource management RRM entity, and the apparatus 400 includes a self-organizing network SON entity.

The resource optimization apparatus 400 according to this embodiment of the present invention may be corresponding to the second network device (for example, the SON entity) in the methods in the embodiments of the present invention. In addition, all units, that is, all modules, in the resource optimization apparatus 400, and the foregoing other operations and/or functions are separately intended to implement corresponding processes of the method 200 in FIG. 4. For brevity, details are not described herein again.

According to the resource optimization apparatus provided in this embodiment of the present invention, a first network device performs resource optimization at a short-time granularity, and a second network device performs resource optimization at a long-time granularity; in addition, after performing, according to a first optimization policy, resource optimization on a target cell at the long-time granularity, the second network entity sends the first optimization policy to the first network device, so that the first network device can adapt to the first optimization policy, and performs resource optimization on the target cell at the short-time granularity. Therefore, consistency between optimization of a time-frequency resource at the short-time granularity and optimization of the time-frequency resource at the long-time granularity can be ensured, and further an optimization effect of the time-frequency resource can be effectively improved, and network performance can be improved.

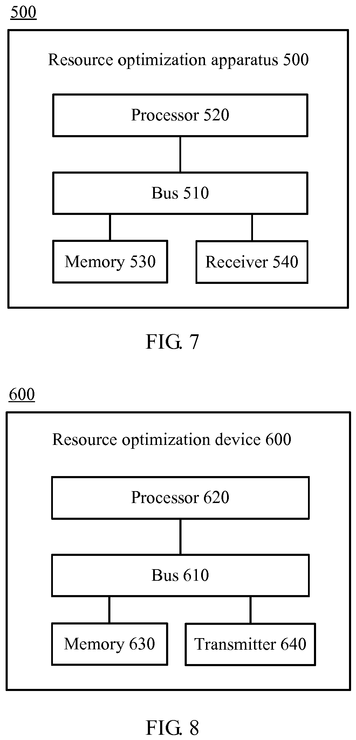

The foregoing has described in detail the resource optimization method according to the embodiments of the present invention with reference to FIG. 1 to FIG. 4. The following describes a resource optimization device according to the embodiments of the present invention with reference to FIG. 7 and FIG. 8.

FIG. 7 shows a resource optimization device 500 according to an embodiment of the present invention. As shown in FIG. 7, the device 500 includes:

> a bus 510;
> a processor 520 connected to the bus 510;
> a memory 530 connected to the bus 510; and
> a receiver 540 connected to the bus 510.

The processor 520 invokes, by using the bus 510, a program stored in the memory 530, so that the processor 520 is configured to control the receiver 540 to receive optimization policy information sent by a second network device, where the optimization policy information is used to indicate a first optimization policy, and the first optimization policy is a policy used by the second network device to optimize a time-frequency resource of a target cell in unit of a first time period;

configured to acquire the first optimization policy according to the optimization policy information; and

configured to optimize, according to the acquired first optimization policy, the time-frequency resource of the target cell in unit of a second time period, where a length of the second time period is less than a length of the first time period, and the second time period is included in the first time period.

Optionally, the processor 520 is specifically configured to determine a transmission rate, within a third time period, of each piece of user equipment that uses the time-frequency resource of the target cell to perform data transmission, where a length of the third time period is less than the length of the first time period, and the third time period is earlier than the first time period;

configured to determine a second optimization policy according to the first optimization policy and the transmission rate of each piece of user equipment within the third time period; and

configured to optimize, according to the second optimization policy, the time-frequency resource of the target cell in unit of the second time period.

Optionally, the processor 520 is specifically configured to determine a third optimization policy according to the first optimization policy, where the third optimization policy is proportional to the first optimization policy; and

configured to optimize, according to the third optimization policy, the time-frequency resource of the target cell in unit of the second time period.

Optionally, the second network device optimizes, according to the first optimization policy and based on a capacity feature and a coverage feature of the target time-frequency resource within a fourth time period, the time-frequency resource of the target cell in unit of the first time period, where the fourth time period is earlier than the first time period.

Optionally, the device 500 includes a radio resource management RRM entity, and the second network device includes a self-organizing network SON entity.

In this embodiment of the present invention, the processor may also be referred to as a CPU. The memory may include a read-only memory and a random access memory, and provides an instruction and data for the processor. A part of the memory may further include a non-volatile random access memory (NVRAM). In a specific application, a signal transmission device may be built in or may be a standard Ethernet communications device such as a personal computer. All modules of the signal transmission device are coupled by using a bus system, where the bus system further includes a power bus, a control bus, and a status signal bus in addition to a signal bus.

The processor can implement or execute the steps and the logical block diagrams disclosed in the method embodiments of the present invention. The general-purpose processor may be a microprocessor, or the processor may be any conventional processor or decoder, or the like. The steps of the methods disclosed in the embodiments of the present invention may be directly executed by a hardware processor, or executed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and a decoding unit or a processing unit reads information from the memory, and completes the steps in the foregoing methods in combination with hardware of the decoding unit or processing unit.

It should be understood that, in this embodiment of the present invention, the processor may be a central processing unit (Central Processing Unit, "CPU" for short), or the processor may be another general-purpose processor, a digital signal processor (DSP), an application-specific integrated circuit (ASIC), a field programmable gate array (FPGA), another programmable logic device, a discrete gate or a transistor logic device, a discrete hardware component, or the like. The general-purpose processor may be a microprocessor, or the processor may be any conventional processor, or the like.

In an implementation process, steps in the foregoing methods may be completed by using an integrated logic circuit of hardware in the processor or instructions in a form of software. The steps of the methods disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor. To avoid repetition, details are not described herein again.

The resource optimization device 500 according to this embodiment of the present invention may be corresponding to the first network device (for example, the RRM entity) in the methods in the embodiments of the present invention. In addition, all units, that is, all modules, in the resource optimization device 500, and the foregoing other operations and/or functions are separately intended to implement corresponding processes of the method 100 in FIG. 3. For brevity, details are not described herein again.

According to the resource optimization device provided in this embodiment of the present invention, a first network device performs resource optimization at a short-time granularity, and a second network device performs resource optimization at a long-time granularity; in addition, after performing, according to a first optimization policy, resource optimization on a target cell at the long-time granularity, the second network entity sends the first optimization policy to the first network device, so that the first network device can adapt to the first optimization policy, and performs resource optimization on the target cell at the short-time granularity. Therefore, consistency between optimization of a time-frequency resource at the short-time granularity and optimization of the time-frequency resource at the long-time granularity can be ensured, and further an optimization effect of the time-frequency resource can be effectively improved, and network performance can be improved.

FIG. 8 shows a resource optimization device 600 according to an embodiment of the present invention. As shown in FIG. 8, the device 600 includes:

a bus 610;
a processor 620 connected to the bus 610;
a memory 630 connected to the bus 610; and
a transmitter 640 connected to the bus 610.

The processor 620 invokes, by using the bus 610, a program stored in the memory 630, so that the processor 620 is configured to determine a first optimization policy, and optimize, according to the first optimization policy, a time-frequency resource of a target cell in unit of a first time period; and

configured to control the transmitter 640 to send optimization policy information to a first network device, where the optimization policy information is used to indicate the first optimization policy, so that the first network device optimizes, according to the first optimization policy, the time-frequency resource of the target cell in unit of a second time period, where a length of the second time period is less than a length of the first time period, and the second time period is included in the first time period.

Optionally, the processor 620 is specifically configured to optimize, according to the first optimization policy and based on a capacity feature and a coverage feature of the target time-frequency resource within a fourth time period, the time-frequency resource of the target cell in unit of the first time period, where the fourth time period is earlier than the first time period.

Optionally, the first network device includes a radio resource management RRM entity, and the device 600 includes a self-organizing network SON entity.

In this embodiment of the present invention, the processor may also be referred to as a CPU. The memory may include a read-only memory and a random access memory, and provides an instruction and data for the processor. A part of the memory may further include a non-volatile random access memory (NVRAM). In a specific application, a signal transmission device may be built in or may be a standard Ethernet communications device such as a personal computer. All modules of the signal transmission device are coupled by using a bus system, where the bus system further includes a power bus, a control bus, and a status signal bus in addition to a signal bus.

The processor can implement or execute the steps and the logical block diagrams disclosed in the method embodiments of the present invention. The general-purpose processor may be a microprocessor, or the processor may be any conventional processor or decoder, or the like. The steps of the methods disclosed in the embodiments of the present invention may be directly executed by a hardware processor, or executed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and a decoding unit or a processing unit reads information from the memory, and completes the steps in the foregoing methods in combination with hardware of the decoding unit or processing unit.

It should be understood that, in this embodiment of the present invention, the processor may be a central processing unit (Central Processing Unit, "CPU" for short), or the processor may be another general-purpose processor, a digital signal processor (DSP), an application-specific integrated circuit (ASIC), a field programmable gate array (FPGA), another programmable logic device, a discrete gate or a transistor logic device, a discrete hardware component, or the like. The general-purpose processor may be a microprocessor, or the processor may be any conventional processor, or the like.

In an implementation process, steps in the foregoing methods may be completed by using an integrated logic circuit of hardware in the processor or instructions in a form of software. The steps of the methods disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor. To avoid repetition, details are not described herein again.

The resource optimization device 600 according to this embodiment of the present invention may be corresponding to the second network device (for example, the SON entity) in the methods in the embodiments of the present invention. In addition, all units, that is, all modules, in the resource optimization device 600, and the foregoing other operations and/or functions are separately intended to implement corresponding processes of the method 200 in FIG. 4. For brevity, details are not described herein again.

According to the resource optimization device provided in this embodiment of the present invention, a first network device performs resource optimization at a short-time granularity, and a second network device performs resource optimization at a long-time granularity; in addition, after performing, according to a first optimization policy, resource optimization on a target cell at the long-time granularity, the second network entity sends the first optimization policy to the first network device, so that the first network device can adapt to the first optimization policy, and performs resource optimization on the target cell at the short-time granularity. Therefore, consistency between optimization of a time-frequency resource at the short-time granularity and optimization of the time-frequency resource at the long-time granularity can be ensured, and further an optimization effect of the time-frequency resource can be effectively improved, and network performance can be improved.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a portable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A resource optimization method (100), wherein the method comprises:

   receiving (S110), by a first network device, optimization policy information sent by a second network device, wherein the optimization policy information is used to indicate a first optimization policy, and the first optimization policy is a policy used by the second network device to optimize a time-frequency resource of a target cell in unit of a first time period;
   acquiring (S120), by the first network device, the first optimization policy according to the received optimization policy information; and
   optimizing (S130), by the first network device, according to the acquired first optimization policy, the time-frequency resource of the target cell in unit of a second time period, wherein a length of the second time period is less than a length of the first time period, and the second time period is comprised in the first time period;
   wherein the optimizing, according to the acquired first optimization policy, the time-frequency resource of the target cell in unit of a second time period comprises:

      determining a transmission rate, within a third time period, of each piece of user equipment that uses the time-frequency resource of the target cell to perform data transmission, wherein a length of the third time period is less than the length of the first time period, and the third time period is earlier than the first time period;
      determining a second optimization policy according to the first optimization policy and the transmission rate of each piece of user equipment within the third time period;
      and
      optimizing, according to the second optimization policy, the time-frequency resource of the target cell in unit of the second time period.

2. The method according to claim 1, wherein the optimizing, according to the acquired first optimization policy, the time-frequency resource of the target cell in unit of a second time period comprises:

   determining a third optimization policy according to the first optimization policy, wherein the third optimization policy is proportional to the first optimization policy; and
   optimizing, according to the third optimization policy, the time-frequency resource of the target cell in unit of the second time period.

3. A resource optimization method (200), wherein the method comprises:

   determining (S210), by a second network device, a first optimization policy, and optimizing, according to the first optimization policy, a time-frequency resource of a target cell in unit of a first time period; and
   sending (S220), by the second network device, optimization policy information to a first network device, wherein the optimization policy information is used to indicate the first optimization policy, so that the first network device optimizes, according to the first optimization policy, the time-frequency resource of the target cell in unit of a second time period, wherein a length of the second time period is less than a length of the first time period, and the second time period is comprised in the first time period;
   wherein the optimizing, according to the first optimization policy, a time-frequency resource of a target cell in unit of a first time period comprises:

      optimizing, according to the first optimization policy and based on a capacity feature and a coverage feature of the target time-frequency resource within a fourth time period, the time-frequency resource of the target cell in unit of the first time period,
      wherein the fourth time period is earlier than the first time period.

4. A resource optimization apparatus (300), the apparatus corresponding to a first network device, wherein the apparatus comprises:

   a receiving unit (310), configured to receive optimization policy information sent by a second network device, wherein the optimization policy information is used to indicate a first optimization policy, and the first optimization policy is a policy used by the second network device to optimize a time-frequency resource of a target cell in unit of a first time period;

an acquiring unit (320), configured to acquire the first optimization policy according to the optimization policy information received by the receiving unit; and

an optimization unit (330), configured to optimize, according to the first optimization policy acquired by the acquiring unit, the time-frequency resource of the target cell in unit of a second time period, wherein a length of the second time period is less than a length of the first time period, and the second time period is comprised in the first time period;

wherein the optimization unit is specifically configured to: determine a transmission rate, within a third time period, of each piece of user equipment that uses the time-frequency resource of the target cell to perform data transmission, wherein a length of the third time period is less than the length of the first time period, and the third time period is earlier than the first time period; determine a second optimization policy according to the first optimization policy and the transmission rate of each piece of user equipment within the third time period; and optimize, according to the second optimization policy, the time-frequency resource of the target cell in unit of the second time period.

5. The apparatus according to claim 4, wherein the optimization unit is specifically configured to:
determine a third optimization policy according to the first optimization policy, wherein the third optimization policy is proportional to the first optimization policy; and optimize, according to the third optimization policy, the time-frequency resource of the target cell in unit of the second time period.

6. The apparatus according to any one of claims 4 to 5, wherein the apparatus comprises a radio resource management RRM entity, and the second network device comprises a self-organizing network SON entity.

7. A resource optimization apparatus (400), the apparatus corresponding to second network device, wherein the apparatus comprises:

a determining unit (410), configured to determine a first optimization policy;

an optimization unit (420), configured to optimize, according to the first optimization policy determined by the determining unit, a time-frequency resource of a target cell in unit of a first time period; and

a sending unit (430), configured to send optimization policy information to a first network device, wherein the optimization policy information is used to indicate the first optimization policy, so that the first network device optimizes, according to the first optimization policy, the time-frequency resource of the target cell in unit of a second time period, wherein a length of the second time period is less than a length of the first time period, and the second time period is comprised in the first time period;

wherein the optimization unit is specifically configured to optimize, according to the first optimization policy and based on a capacity feature and a coverage feature of the target time-frequency resource within a fourth time period, the time-frequency resource of the target cell in unit of the first time period, wherein the fourth time period is earlier than the first time period.

8. The apparatus according to any one of claim 6 or 7, wherein the first network device comprises a radio resource management RRM entity, and the apparatus comprises a self-organizing network SON entity.

**Patentansprüche**

1. Ressourcen-Optimierungsverfahren (100), wobei das Verfahren umfasst:

Empfangen (S110), durch eine erste Netzwerkeinrichtung, von durch eine zweite Netzwerkeinrichtung gesendeten Optimierungsrichtlinien-Informationen, wobei die Optimierungsrichtlinien-Informationen benutzt werden, um eine erste Optimierungsrichtlinie anzugeben, und die erste Optimierungsrichtlinie eine Richtlinie ist, die von der zweiten Netzwerkeinrichtung benutzt wird, um eine Zeitfrequenz-Ressource einer Ziel-Zelle in Einheiten einer ersten Zeitperiode zu optimieren;

Erfassen (S120), durch die erste Netzwerkeinrichtung, der ersten Optimierungsrichtlinie gemäß den empfangenen Optimierungsrichtlinien-Informationen; und

Optimieren (S130), durch die erste Netzwerkeinrichtung, gemäß der erfassten ersten Optimierungsrichtlinie, der Zeitfrequenz-Ressource der Ziel-Zelle in Einheiten einer zweiten Zeitperiode, wobei eine Länge der zweiten Zeitperiode geringer als eine Länge der ersten Zeitperiode ist und die zweite Zeitperiode in der ersten Zeitperiode umfasst ist;

wobei das Optimieren, gemäß der erfassten ersten Optimierungsrichtlinie, der Zeitfrequenz-Ressource der Ziel-Zelle in Einheiten einer zweiten Zeitperiode umfasst:

Bestimmen einer Übertragungsrate, innerhalb einer dritten Zeitperiode, jedes Benutzerausrüstungselements, welches die Zeitfrequenz-Ressource der Ziel-Zelle zum Durchführen von Datenübertragungen benutzt, wobei eine Länge der dritten Zeitperiode geringer ist als die Länge der ersten Zeitperiode und die dritte Zeitperiode früher ist als die erste Zeitperiode;

Bestimmen einer zweiten Optimierungsrichtlinie gemäß der ersten Optimierungsrichtlinie und der Übertragungsrate jedes Benutzerausrüstungselements innerhalb der dritten Zeitperiode; und

Optimieren, gemäß der zweiten Optimierungsrichtlinie, der Zeitfrequenz-Ressource der Ziel-Zelle in Einheiten der zweiten Zeitperiode.

2. Verfahren nach Anspruch 1, wobei das Optimieren, gemäß der erfassten ersten Optimierungsrichtlinie, der Zeitfrequenz-Ressource der Ziel-Zelle in Einheiten einer zweiten Zeitperiode umfasst:

Bestimmen einer dritten Optimierungsrichtlinie gemäß der ersten Optimierungsrichtlinie, wobei die dritte Optimierungsrichtlinie proportional zu der ersten Optimierungsrichtlinie ist; und

Optimieren, gemäß der dritten Optimierungsrichtlinie, der Zeitfrequenz-Ressource der Ziel-Zelle in Einheiten der zweiten Zeitperiode.

3. Ressourcen-Optimierungsverfahren (200), wobei das Verfahren umfasst:

Bestimmen (S210), durch eine zweite Netzwerkeinrichtung, einer ersten Optimierungsrichtlinie, und Optimieren, gemäß der ersten Optimierungsrichtlinie, einer Zeitfrequenz-Ressource einer Ziel-Zelle in Einheiten einer ersten Zeitperiode;

und

Senden (S220), durch die zweite Netzwerkeinrichtung, von Optimierungsrichtlinien-Informationen an eine erste Netzwerkeinrichtung, wobei die Optimierungsrichtlinien-Informationen benutzt werden, um die erste Optimierungsrichtlinie anzugeben, so dass die erste Netzwerkeinrichtung, gemäß der ersten Optimierungsrichtlinie, die Zeitfrequenz-Ressource der Ziel-Zelle in Einheiten einer zweiten Zeitperiode optimiert, wobei eine Länge der zweiten Zeitperiode geringer ist als eine Länge der ersten Zeitperiode und die zweite Zeitperiode in der ersten Zeitperiode umfasst ist; wobei das Optimieren, gemäß der ersten Optimierungsrichtlinie, einer Zeitfrequenz-Ressource einer Ziel-Zelle in Einheiten einer ersten Zeitperiode umfasst:

Optimieren, gemäß der ersten Optimierungsrichtlinie und basierend auf einem Kapazitätsmerkmal und einem Abdeckungsmerkmal der Ziel-Zeitfrequenz-Ressource innerhalb einer vierten Zeitperiode, der Zeitfrequenz-Ressource der Ziel-Zelle in Einheiten der ersten Zeitperiode, wobei die vierte Zeitperiode früher ist als die erste Zeitperiode.

4. Ressourcen-Optimierungsvorrichtung (300), wobei die Vorrichtung einer ersten Netzwerkeinrichtung entspricht, wobei die Vorrichtung umfasst:

eine Empfangseinheit (310), die dazu eingerichtet ist, durch eine zweite Netzwerkeinrichtung gesendete Optimierungsrichtlinien-Informationen zu empfangen, wobei die Optimierungsrichtlinien-Informationen benutzt werden, um eine erste Optimierungsrichtlinie anzugeben, und die erste Optimierungsrichtlinie eine Richtlinie ist, die von der zweiten Netzwerkeinrichtung benutzt wird, um eine Zeitfrequenz-Ressource einer Ziel-Zelle in Einheiten einer ersten Zeitperiode zu optimieren;

eine Erfassungseinheit (320), die dazu eingerichtet ist, eine Optimierungsrichtlinie gemäß den durch die Empfangseinheit empfangenen Optimierungsrichtlinien-Informationen zu erfassen; und

eine Optimierungseinheit (330), die dazu eingerichtet ist, gemäß der durch die Erfassungseinheit erfassten ersten Optimierungsrichtlinie, die Zeitfrequenz-Ressource der Ziel-Zelle in Einheiten einer zweiten Zeitperiode zu optimieren, wobei eine Länge der zweiten Zeitperiode geringer als eine Länge der ersten Zeitperiode ist und die zweite Zeitperiode in der ersten Zeitperiode umfasst ist;

wobei die Optimierungseinheit speziell dazu eingerichtet ist:

eine Übertragungsrate, innerhalb einer dritten Zeitperiode, jedes Benutzerausrüstungselements, welches die Zeitfrequenz-Ressource der Ziel-Zelle zum Durchführen von Datenübertragungen benutzt, zu bestimmen, wobei eine Länge der dritten Zeitperiode geringer ist als die Länge der ersten Zeitperiode und die dritte Zeitperiode früher ist als die erste Zeitperiode;

eine zweite Optimierungsrichtlinie gemäß der ersten Optimierungsrichtlinie und der Übertragungsrate jedes Benutzerausrüstungselements innerhalb der dritten Zeitperiode zu bestimmen; und

gemäß der zweiten Optimierungsrichtlinie die Zeitfrequenz-Ressource der Ziel-Zelle in Einheiten der zweiten Zeitperiode zu optimieren.

**5.** Vorrichtung nach Anspruch 4, wobei die Optimierungseinheit speziell dazu eingerichtet ist:

eine dritte Optimierungsrichtlinie gemäß der ersten Optimierungsrichtlinie zu bestimmen, wobei die dritte Optimierungsrichtlinie proportional zu der ersten Optimierungsrichtlinie ist; und

gemäß der dritten Optimierungsrichtlinie die Zeitfrequenz-Ressource der Ziel-Zelle in Einheiten der zweiten Zeitperiode zu optimieren.

**6.** Vorrichtung nach einem der Ansprüche 4 oder 5, wobei die Vorrichtung eine Funkressourcen-Verwaltungs-, RRM-, Entität umfasst und die zweite Netzwerkeinrichtung eine Selbstorganisierendes-Netzwerk-, SON-, Entität umfasst.

**7.** Ressourcen-Optimierungsvorrichtung (400), wobei die Vorrichtung der zweiten Netzwerkeinrichtung entspricht, wobei die Vorrichtung umfasst:

eine Bestimmungseinheit (410), die dazu eingerichtet ist, eine erste Optimierungsrichtlinie zu bestimmen;
eine Optimierungseinheit (420), die dazu eingerichtet ist, gemäß der ersten Optimierungsrichtlinie eine Zeitfrequenz-Ressource einer Ziel-Zelle in Einheiten einer ersten Zeitperiode zu optimieren; und
eine Sendeeinheit (430), die dazu eingerichtet ist, Optimierungsrichtlinien-Informationen an eine erste Netzwerkeinrichtung zu senden, wobei die Optimierungsrichtlinien-Informationen benutzt werden, um die erste Optimierungsrichtlinie anzugeben, so dass die erste Netzwerkeinrichtung, gemäß der ersten Optimierungsrichtlinie, die Zeitfrequenz-Ressource der Ziel-Zelle in Einheiten einer zweiten Zeitperiode optimiert, wobei eine Länge der zweiten Zeitperiode geringer ist als eine Länge der ersten Zeitperiode und die zweite Zeitperiode in der ersten Zeitperiode umfasst ist;
wobei die Optimierungseinheit speziell dazu eingerichtet ist, gemäß der ersten Optimierungsrichtlinie und basierend auf einem Kapazitätsmerkmal und einem Abdeckungsmerkmal der Ziel-Zeitfrequenz-Ressource innerhalb einer vierten Zeitperiode die Zeitfrequenz-Ressource der Ziel-Zelle in Einheiten der ersten Zeitperiode zu optimieren, wobei die vierte Zeitperiode früher ist als die erste Zeitperiode.

**8.** Vorrichtung nach einem der Ansprüche 6 oder 7, wobei die erste Netzwerkeinrichtung eine Funkressourcen-Verwaltungs-, RRM-, Entität umfasst und die zweite Vorrichtung eine Selbstorganisierendes-Netzwerk-, SON-, Entität umfasst.

**Revendications**

**1.** Procédé d'optimisation de ressource (100), dans lequel le procédé consiste :

à recevoir (S110), au moyen d'un premier dispositif de réseau, des informations de politique d'optimisation envoyées par un second dispositif de réseau, dans lequel les informations de politique d'optimisation sont utilisées pour indiquer une première politique d'optimisation et la première politique d'optimisation est une politique utilisée par le second dispositif de réseau pour optimiser une ressource temps-fréquence d'une cellule cible comme unité d'une première période de temps ;
à acquérir (S120), au moyen du premier dispositif de réseau, la première politique d'optimisation en fonction des informations de politique d'optimisation reçues ; et à optimiser (S130), au moyen du premier dispositif de réseau, en fonction de la première politique d'optimisation acquise, la ressource temps-fréquence de la cellule cible comme unité d'une deuxième période de temps, dans lequel une durée de la deuxième période de temps est inférieure à la durée de la première période de temps, et la deuxième période de temps est incluse dans la première période de temps ; dans lequel l'optimisation, en fonction de la première politique d'optimisation acquise, de la ressource temps-fréquence de la cellule cible comme unité d'une deuxième période de temps consiste :

à déterminer une vitesse de transmission, pendant une troisième période de temps, de chaque pièce d'un équipement utilisateur qui utilise la ressource temps-fréquence de la cellule cible pour effectuer une transmission de données, dans lequel une durée de la troisième période de temps est inférieure à la durée de la première période de temps et la troisième période de temps est antérieure à la première période de temps ;

à déterminer une deuxième politique d'optimisation en fonction de la première politique d'optimisation et de la vitesse de transmission de chaque pièce d'équipement utilisateur pendant la troisième période de temps ; et

à optimiser, en fonction de la deuxième politique d'optimisation, la ressource temps-fréquence de la cellule cible comme unité de la deuxième période de temps.

2. Procédé selon la revendication 1, dans lequel l'optimisation, en fonction de la première politique d'optimisation acquise, de la ressource temps-fréquence de la cellule cible comme unité d'une deuxième période de temps consiste :

à déterminer une troisième politique d'optimisation en fonction de la première politique d'optimisation, dans lequel la troisième politique d'optimisation est proportionnelle à la première politique d'optimisation ; et

à optimiser, en fonction de la troisième politique d'optimisation, la ressource temps-fréquence de la cellule cible comme unité de la deuxième période de temps.

3. Procédé d'optimisation de ressource (200), dans lequel le procédé consiste :

à déterminer (S210), au moyen d'un second dispositif de réseau, une première politique d'optimisation et à optimiser, en fonction de la première politique d'optimisation, une ressource temps-fréquence d'une cellule cible comme unité d'une première période de temps ; et

à envoyer (S220), au moyen du second dispositif de réseau, des informations de politique d'optimisation à un premier dispositif de réseau, dans lequel les informations de politique d'optimisation sont utilisées pour indiquer la première politique d'optimisation de telle sorte que le premier dispositif de réseau optimise, en fonction de la première politique d'optimisation, la ressource temps-fréquence de la cellule cible comme unité d'une deuxième période de temps, dans lequel une durée de la deuxième période de temps est inférieure à une durée de la première période de temps et la deuxième période de temps est incluse dans la première période de temps ;

dans lequel l'optimisation, en fonction de la première politique d'optimisation, d'une ressource temps-fréquence d'une cellule cible comme unité d'une première période de temps consiste :

à optimiser, en fonction de la première politique d'optimisation et en se basant sur une caractéristique de capacité et sur une caractéristique de couverture de la ressource temps-fréquence cible pendant une quatrième période de temps, la ressource temps-fréquence de la cellule cible comme unité de la première période de temps, dans lequel la quatrième période de temps est antérieure à la première période de temps.

4. Appareil d'optimisation de ressource (300), l'appareil correspondant à un premier dispositif de réseau, dans lequel l'appareil comprend :

une unité de réception (310), configurée pour recevoir des informations de politique d'optimisation envoyées par un second dispositif de réseau, dans lequel les informations de politique d'optimisation sont utilisées pour indiquer une première politique d'optimisation et la première politique d'optimisation est une politique utilisée par le second dispositif de réseau pour optimiser une ressource temps-fréquence d'une cellule cible comme unité d'une première période de temps ;

une unité d'acquisition (320), configurée pour acquérir la première politique d'optimisation en fonction des informations de politique d'optimisation reçues par l'unité de réception ; et

une unité d'optimisation (330), configurée pour optimiser, en fonction de la première politique d'optimisation acquise par l'unité d'acquisition, la ressource temps-fréquence de la cellule cible comme unité d'une deuxième période de temps, dans lequel une durée de la deuxième période de temps est inférieure à la durée de la première période de temps, et la deuxième période de temps est incluse dans la première période de temps ;

dans lequel l'unité d'optimisation est spécialement configurée :

pour déterminer une vitesse de transmission, pendant une troisième période de temps, de chaque pièce d'un équipement utilisateur qui utilise la ressource temps-fréquence de la cellule cible pour effectuer une transmission de données, dans lequel une durée de la troisième période de temps est inférieure à la durée de la première période de temps et la troisième période de temps est antérieure à la première période de temps ; pour déterminer une deuxième politique d'optimisation en fonction de la première politique d'optimisation et de la vitesse de transmission de chaque pièce d'équipement utilisateur pendant la troisième période de temps ; et pour optimiser, en fonction de la deuxième politique d'optimisation, la ressource temps-fréquence de la cellule cible comme unité de la deuxième période de temps.

**5.** Appareil selon la revendication 4, dans lequel l'unité d'optimisation est spécialement configurée :
pour déterminer une troisième politique d'optimisation en fonction de la première politique d'optimisation, dans lequel la troisième politique d'optimisation est proportionnelle à la première politique d'optimisation ; et pour optimiser, en fonction de la troisième politique d'optimisation, la ressource temps-fréquence de la cellule cible comme unité de la deuxième période de temps.

**6.** Appareil selon l'une quelconque des revendications 4 à 5, dans lequel l'appareil comprend une entité de gestion de ressources radio (RRM) et le second dispositif de réseau comprend une entité de réseau auto-organisateur (SON).

**7.** Appareil d'optimisation de ressource (400), l'appareil correspondant à un second dispositif de réseau, dans lequel l'appareil comprend :

une unité de détermination (410), configurée pour déterminer une première politique d'optimisation ;
une unité d'optimisation (420), configurée pour optimiser, en fonction de la première politique d'optimisation déterminée par l'unité de détermination, une ressource temps-fréquence d'une cellule cible comme unité d'une première période de temps ;
et
une unité d'envoi (430), configurée pour envoyer des informations de politique d'optimisation à un premier dispositif de réseau, dans lequel les informations de politique d'optimisation sont utilisées pour indiquer la première politique d'optimisation de telle sorte que le premier dispositif de réseau optimise, en fonction de la première politique d'optimisation, la ressource temps-fréquence de la cellule cible comme unité d'une deuxième période de temps, dans lequel une durée de la deuxième période de temps est inférieure à une durée de la première période de temps et la deuxième période de temps est incluse dans la première période de temps ;
dans lequel l'unité d'optimisation est spécialement configurée pour optimiser, en fonction de la première politique d'optimisation et en se basant sur une caractéristique de capacité et sur une caractéristique de couverture de la ressource temps-fréquence cible pendant une quatrième période de temps, la ressource temps-fréquence de la cellule cible comme unité de la première période de temps, dans lequel la quatrième période de temps est antérieure à la première période de temps.

**8.** Appareil selon l'une quelconque des revendications 6 ou 7, dans lequel le premier dispositif de réseau comprend une entité de gestion de ressources radio (RRM) et l'appareil comprend une entité de réseau auto-organisateur (SON).

Network coordinator

SON entity

Base station

RRM entity

Base station

RRM entity

Base station

RRM entity

FIG. 1

Base station

SON entity —— RRM entity

Base station

RRM entity

Base station

RRM entity

Base station

RRM entity

FIG. 2

100

| A first network device receives optimization policy information sent by a second network device, where the optimization policy information is used to indicate a first optimization policy, and the first optimization policy is a policy used by the second network device to optimize a time-frequency resource of a target cell in unit of a first time period | S110 |

| Acquire the first optimization policy according to the received optimization policy information | S120 |

| Optimize, according to the acquired first optimization policy, the time-frequency resource of the target cell in unit of a second time period, where a length of the second time period is less than a length of the first time period, and the second time period is included in the first time period | S130 |

FIG. 3

200

| A second network device determines a first optimization policy, and optimizes, according to the first optimization policy, a time-frequency resource of a target cell in unit of a first time period | S210 |

| Send optimization policy information to a first network device, where the optimization policy information is used to indicate the first optimization policy, so that the first network device optimizes, according to the first optimization policy, the time-frequency resource of the target cell in unit of a second time period, where a length of the second time period is less than a length of the first time period, and the second time period is included in the first time period | S220 |

FIG. 4

300

Resource optimization apparatus 300

Receiving unit 310

Acquiring unit 320

Optimization unit 330

FIG. 5

400

Resource optimization apparatus 400

Determining unit 410

Optimization unit 420

Sending unit 430

FIG. 6

500

```
┌─────────────────────────────────────────────┐
│  Resource optimization apparatus 500          │
│                                               │
│      ┌─────────────────────────────┐         │
│      │       Processor 520          │         │
│      └──────────────┬──────────────┘         │
│                     │                         │
│      ┌──────────────┴──────────────┐         │
│      │          Bus 510             │         │
│      └──────┬───────────────┬───────┘         │
│             │               │                 │
│      ┌──────┴──────┐  ┌─────┴────────┐        │
│      │ Memory 530  │  │ Receiver 540 │        │
│      └─────────────┘  └──────────────┘        │
└─────────────────────────────────────────────┘
```

FIG. 7

600

```
┌─────────────────────────────────────────────┐
│  Resource optimization device 600             │
│                                               │
│      ┌─────────────────────────────┐         │
│      │       Processor 620          │         │
│      └──────────────┬──────────────┘         │
│                     │                         │
│      ┌──────────────┴──────────────┐         │
│      │          Bus 610             │         │
│      └──────┬───────────────┬───────┘         │
│             │               │                 │
│      ┌──────┴──────┐  ┌─────┴──────────┐      │
│      │ Memory 630  │  │ Transmitter 640│      │
│      └─────────────┘  └────────────────┘      │
└─────────────────────────────────────────────┘
```

FIG. 8

**EP 3 154 290 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2672749 A1